# EUROPEAN PATENT APPLICATION

(11) **EP 4 779 569 A1**
(43) Date of publication of application: **22.07.2026**
(21) Application number: 24866862.6
(22) Date of filing: 09.05.2024
(51) Int. Cl.: G06T 11/00

(54) **GRAPH LAYOUT METHOD AND RELATED DEVICE**

(30) Priority: 22.09.2023 CN 202311235023; 15.11.2023 CN 202311535266
(71) Applicant: Huawei Cloud Computing Technologies Co., Ltd., Gui'an New District, Guizhou 550025 (CN)
(72) Inventor: WEI, Datong, Guiyang, Guizhou 550025 (CN); ZHANG, Jiang, Guiyang, Guizhou 550025 (CN); XU, Ke, Guiyang, Guizhou 550025 (CN); LONG, Jiang, Guiyang, Guizhou 550025 (CN); WANG, Jiannan, Guiyang, Guizhou 550025 (CN)
(74) Representative: Goddar, Heinz J.
(86) International application number: PCT/CN2024/091924
(87) International publication number: WO 2025/060438

(57) **Abstract**

This application provides a graph layout method, applied to a graph layout system. The graph layout system includes a visualization module, a layout management module, and a layout computation module. The layout management module and the layout computation module perform data exchange by using a shared memory. The method includes: The visualization module receives a layout adjustment request, and provides an adjusted graph layout parameter for the layout management module. The layout management module loads the adjusted graph layout parameter into the shared memory. The layout computation module obtains the adjusted graph layout parameter from the shared memory, performs at least one iterative computation based on the adjusted graph layout parameter, and updates an adjusted graph layout result in the shared memory. The adjusted graph layout result includes at least one of an intermediate result or a final result. The visualization module displays the adjusted graph layout result. The method can provide a technical solution for layout featuring high-performance, real-time presentation, and interaction, thereby improving user experience when a user views a graph (especially a large-scale graph).

## Description

This application claims priorities to Chinese Patent Application No. 202311235023.6, filed with the China National Intellectual Property Administration on September 22, 2023 and entitled "GRAPH LAYOUT PROCESSING METHOD AND RELATED SYSTEM", and to Chinese Patent Application No. 202311535266.1, filed with the China National Intellectual Property Administration on November 15, 2023 and entitled "GRAPH LAYOUT METHOD AND RELATED DEVICE", which are incorporated herein by reference in their entireties.

### TECHNICAL FIELD

This application relates to the field of computer technologies, and in particular, to a graph layout method and system, a compute device, a computer-readable storage medium, and a computer program product.

### BACKGROUND

With advent of the information age, information visualization (Information visualization, infovis) can enhance perception of information, and therefore has been widely applied to fields such as relationship analysis and data governance. A typical application of information visualization is graph visualization (Graph Visualization). Graph visualization specifically displays a relationship between elements through graphs to help users observe or analyze data.

An effect of graph visualization is usually related to a graph layout (a layout of elements in a graph). A good graph layout facilitates in-depth mining or exploration for the users. With development of a web-based display technology, webs (web) become a main carrier for graph visualization. In comparison with native applications, web applications are often less efficient in algorithm execution due to limitation of JavaScript. Consequently, it is difficult to display large-scale interactive graphs on webs.

### SUMMARY

This application provides a graph layout method. In the method, based on a shared memory, efficient transmission of a graph layout parameter and a graph layout result is implemented, so that real-time presentation of an intermediate result can be supported, and real-time adjustment of a graph layout by a user can be supported, thereby implementing a quick response to user interaction. Even for a large-scale graph, a technical solution for layout featuring high-performance, real-time presentation, and interaction can be provided, thereby improving user experience. This application further provides a graph layout system corresponding to the foregoing graph layout method, a compute device, a computer-readable storage medium, and a computer program product.

According to a first aspect, this application provides a graph layout method. The method may be performed by a graph layout system. The graph layout system may be a software system. The software system may be integrated into a browser, for example, used as a functional module of the browser, to provide a graph layout capability for a browser-based web application. The software system may alternatively be independent of a browser, and the browser invokes the software system to implement a graph layout. The software system may be deployed on a compute device, for example, deployed on a terminal device (which may also be referred to as a terminal for short) like a desktop computer, a notebook computer, a tablet computer, or a smartphone. The compute device executes program code of the software system, to perform the graph layout method in this application. The graph layout system may alternatively be a hardware system, for example, a compute device having a graph layout function. When the hardware system runs, the graph layout method in this application is performed.

Specifically, the graph layout system includes a visualization module, a layout management module, and a layout computation module. The layout management module and the layout computation module perform data exchange by using a shared memory. The visualization module may be a user interface main thread, the layout management module may be a graph layout worker thread, and the layout computation module may be a graph layout engine, also referred to as a layout computing engine or a graph layout computing engine. The shared memory includes but is not limited to a shared memory between threads. A memory shared by modules with different running environments or execution languages in a same thread, for example, JavaScript and WebAssembly (WebAssembly, WASM), is also referred to as a shared memory in this specification.

The visualization module may receive a layout adjustment request, where the layout adjustment request includes an adjusted graph layout parameter, and then the visualization module provides the adjusted graph layout parameter for the layout management module. The layout management module loads the adjusted graph layout parameter into the shared memory. The layout computation module obtains the adjusted graph layout parameter from the shared memory, performs at least one iterative computation based on the adjusted graph layout parameter, and updates an adjusted graph layout result in the shared memory, where the adjusted graph layout result includes at least one of an intermediate result or a final result. The visualization module displays the adjusted graph layout result.

In the method, based on the shared memory, efficient transmission of the graph layout parameter and the graph layout result is implemented, so that real-time presentation of the intermediate result can be supported, and real-time adjustment of the graph layout by a user can be supported, thereby implementing a quick response to user interaction. Regardless of a small-scale graph or a large-scale graph, the method can provide a technical solution for layout featuring high-performance, real-time presentation, and interaction, thereby improving user experience when the user views a graph (especially the large-scale graph).

In some possible implementations, before the visualization module receives the layout adjustment request, the visualization module receives an access request, where the access request is used to access a web that supports graph visualization. The visualization module provides a graph layout parameter for the layout management module based on the access request. The layout management module loads the graph layout parameter into the shared memory. The layout computation module obtains the graph layout parameter from the shared memory, performs at least one iterative computation based on the graph layout parameter, and updates a graph layout result in the shared memory, where the graph layout result includes the intermediate result. The visualization module may further display the graph layout result.

In this way, the intermediate result can be displayed in real time in a graph layout process, so that the user can intervene and adjust the graph layout based on the intermediate result, thereby ensuring quality and efficiency of the graph layout.

In some possible implementations, the visualization module may further receive a query request of the user. The visualization module queries the adjusted graph layout result in response to the query request, and displays the adjusted graph layout result. In this way, the graph layout result can be queried in response to a user requirement, to implement on-demand query.

In some possible implementations, the visualization module may query the adjusted graph layout result in response to a scheduled task, and the visualization module renders the adjusted graph layout result, and displays the rendered graph layout result. A cycle of the scheduled task may be equal to a refresh cycle of the browser, and a frequency of the scheduled task may be equal to a rendering frequency (for example, a refresh frequency) of the browser. In this way, the layout management module does not return a result after each iterative computation. Instead, a graph layout result is queried on demand based on the rendering frequency of the browser, thereby reducing unnecessary communication and further reducing resource overheads.

In some possible implementations, the visualization module may further provide a layout identifier for the layout management module. Correspondingly, the visualization module may query, based on the layout identifier, the adjusted graph layout result corresponding to the layout identifier.

The method introduces the layout identifier to implement layout management of different versions. In addition, the graph layout result is queried with reference to the layout identifier, and verification may be performed by using the layout identifier, to prevent an impact of a previous layout result and ensure accuracy of the query result.

In some possible implementations, the visualization module may send a graph layout adjustment message to the layout management module, where the graph layout adjustment message carries the adjusted graph layout parameter.

In the method, an appropriate message mechanism is used to enable the visualization module to obtain a latest graph layout result in time when a page is refreshed. The graph layout engine can respond to a graph layout parameter update in real time, thereby supporting real-time display of the graph layout result and real-time adjustment of the graph layout parameter by the user.

In some possible implementations, the layout management module may further split an iterative compute task into a plurality of subtasks, and add the plurality of subtasks to a task queue, where the subtask indicates the layout computation module to perform at least one iterative computation. When receiving a message from the visualization module, the layout management module adds a message event corresponding to the message to the task queue, for processing the message when execution of a currently executed subtask is completed.

In the method, a long task is split into subtasks, and the subtasks including at least one iterative computation are separately added to the task queue of the browser. When the visualization module sends the message, the corresponding message event is added to a task queue used for message processing. After a subtask for performing iterative computation ends, the message instead of a next computation may be preferentially processed. In this way, a problem that the visualization module cannot be responded to in time due to layout computation blocking can be resolved, and a real-time interaction capability is provided.

In some possible implementations, it is considered that a high-performance graph layout engine (the layout computation module) is fast in a single computation, and a minimum time interval (for example, 4 milliseconds) is usually set for adding to the task queue. If time for a single layout iteration is less than 4 milliseconds, a waste of time is caused. In view of this, the layout management module may count time for a single iterative computation, and determine a quantity of iterative computations in the subtasks based on the time for a single iterative computation.

In this way, execution time of the subtask can be kept exactly greater than the minimum time interval, and the layout management module does not stay in an idle state for a long time, thereby improving resource utilization.

In some possible implementations, the visualization module and the layout management module perform data exchange by using a shared memory. Correspondingly, the visualization module may provide the adjusted graph layout parameter for the layout management module by using the shared memory.

In the method, based on the shared memory of the browser, efficient transmission of the graph layout parameter and the graph layout result is implemented between the visualization module (for example, the user interface main thread) and the layout management module (for example, the worker thread), so that the visualization module can obtain the graph layout result in real time, and suspend or stop the layout when necessary, thereby reducing data communication overheads, and implementing real-time presentation of the graph layout result and quick response to user interaction.

In some possible implementations, after the layout management module adds a lock to a target parameter in the adjusted graph layout parameter, the layout computation module may perform iterative computation based on the target parameter, and update, in the shared memory, the adjusted graph layout result obtained through the iterative computation. In this way, the visualization module can be prevented from reading data in the computation, thereby ensuring data security.

In some possible implementations, the layout computation module includes a layout computing engine based on WebAssembly, WebGL, or WebGPU.

In the method, based on a browser task mechanism, high-performance engines such as WebAssembly, WebGL, and WebGPU are used to accelerate layout computation in a non-blocking manner in the worker thread (the layout management module) to shorten computation time, so as to ensure response to the main thread (the visualization module), implementing real-time presentation of the graph layout result and quick response to user interaction.

According to a second aspect, this application provides a graph layout system. The graph layout system includes a visualization module, a layout management module, and a layout computation module, where the layout management module and the layout computation module perform data exchange by using a shared memory.

The visualization module is configured to: receive a layout adjustment request, where the layout adjustment request includes an adjusted graph layout parameter, and provide the adjusted graph layout parameter for the layout management module.

The layout management module is configured to load the adjusted graph layout parameter into the shared memory.

The layout computation module is configured to: obtain the adjusted graph layout parameter from the shared memory, perform at least one iterative computation based on the adjusted graph layout parameter, and update an adjusted graph layout result in the shared memory, where the adjusted graph layout result includes at least one of an intermediate result or a final result.

The visualization module is further configured to display the adjusted graph layout result.

In some possible implementations, the visualization module is further configured to:
receive an access request, where the access request is used to access a web that supports graph visualization; and
provide a graph layout parameter for the layout management module based on the access request.

The layout management module is further configured to:
load the graph layout parameter into the shared memory.

The layout computation module is further configured to:
obtain the graph layout parameter from the shared memory, perform at least one iterative computation based on the graph layout parameter, and update a graph layout result in the shared memory, where the graph layout result includes the intermediate result.

The visualization module is further configured to:
display the graph layout result.

In some possible implementations, the visualization module is further configured to:
receive a query request of a user; and
query the adjusted graph layout result in response to the query request, and display the adjusted graph layout result.

In some possible implementations, the visualization module is specifically configured to:
query the adjusted graph layout result in response to a scheduled task; and
render the adjusted graph layout result, and display the rendered graph layout result.

In some possible implementations, the visualization module is further configured to:
provide a layout identifier for the layout management module.

The visualization module is specifically configured to:
query, based on the layout identifier, the adjusted graph layout result corresponding to the layout identifier.

In some possible implementations, the visualization module is specifically configured to:
send a graph layout adjustment message to the layout management module, where the graph layout adjustment message carries the adjusted graph layout parameter.

In some possible implementations, the layout management module is further configured to:
split an iterative compute task into a plurality of subtasks, and add the plurality of subtasks to a task queue, where the subtask indicates the layout computation module to perform at least one iterative computation; and
when receiving a message from the visualization module, add a message event corresponding to the message to the task queue, for processing the message when execution of a currently executed subtask is completed.

In some possible implementations, the layout management module is further configured to:
count time for a single iterative computation, and determine a quantity of iterative computations in the subtasks based on the time for a single iterative computation.

In some possible implementations, the visualization module and the layout management module perform data exchange by using a shared memory, and the visualization module is specifically configured to:
provide the adjusted graph layout parameter for the layout management module by using the shared memory.

In some possible implementations, the layout computation module is specifically configured to:
after the layout management module adds a lock to a target parameter in the adjusted graph layout parameter, perform iterative computation based on the target parameter, and update, in the shared memory, the adjusted graph layout result obtained through the iterative computation.

In some possible implementations, the layout computation module includes a layout computing engine based on WebAssembly, WebGL, or WebGPU.

According to a third aspect, this application provides a compute device. The compute device includes at least one processor and at least one memory. The at least one processor and the at least one memory communicate with each other. The at least one processor is configured to execute instructions stored in the at least one memory, to enable the compute device to perform the graph layout method according to any one of the first aspect or the implementations of the first aspect.

According to a fourth aspect, this application provides a computer-readable storage medium. The computer-readable storage medium stores instructions, and the instructions instruct a compute device to perform the graph layout method according to any one of the first aspect or the implementations of the first aspect.

According to a fifth aspect, this application provides a computer program product including instructions. When the computer program product runs on a compute device, the compute device is enabled to perform the graph layout method according to any one of the first aspect or the implementations of the first aspect.

In this application, based on implementations provided in the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1A is a flowchart of a graph layout method according to this application;
FIG. 1B is a flowchart of another graph layout method according to this application;
FIG. 2 is a diagram of an architecture of a graph layout system according to an embodiment of this application;
FIG. 3A is a layout diagram of an object relationship diagram according to an embodiment of this application;
FIG. 3B is a layout diagram of a data asset graph according to an embodiment of this application;
FIG. 3C is a layout diagram of a bubble chart according to an embodiment of this application;
FIG. 3D is a layout diagram of another bubble chart according to an embodiment of this application;
FIG. 3E is a layout diagram of a beeswarm plot according to an embodiment of this application;
FIG. 4 is a flowchart of a graph layout method according to an embodiment of this application;
FIG. 5 is a signaling flowchart of a graph layout method in which data is exchanged based on a message mechanism according to an embodiment of this application;
FIG. 6 is a signaling flowchart of a graph layout method in which data is exchanged based on a shared memory mechanism according to an embodiment of this application; and
FIG. 7 is a diagram of a structure of a compute device according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

Graph visualization (Graph Visualization) is an information visualization technology that presents information or data through graphs. A graph can display a relationship between elements to help users observe and analyze data. The element may be an entity entity extracted from data, including but not limited to a person name, a location, contact information, time, and a network address (Internet protocol address, IP). The IP may be used to identify a device (for example, a compute device like a server, or a network device like a router).

Based on different application scenarios, graphs generated by using the graph visualization technology may be classified into different types. The graph visualization technology may be applied to an application that requires iterative computations. The application that requires iterative computations may be a web-based graph visualization application, including but not limited to a data asset graph application, a network structure visualization application, an object relationship analysis application, a knowledge graph application, or another force-oriented visualization application. Correspondingly, the graph generated by using the graph visualization technology may include an object relationship diagram, a data asset graph, a network topology diagram, a knowledge graph, a force-oriented bubble chart (Bubble chart), and a beeswarm plot (Beeswarm plot).

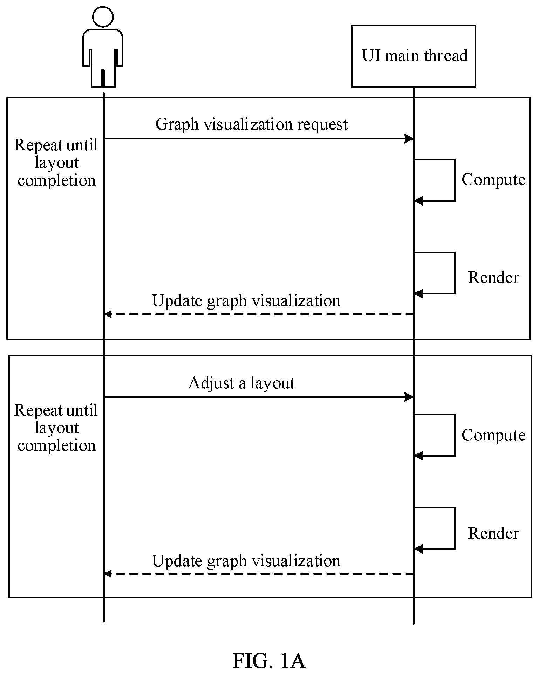

The core of the graph visualization technology is a graph layout. In a technical solution for the graph layout, an animated and interactive graph layout method is widely used. As shown in FIG. 1A, all operations (including iterative computation and rendering) are performed in a user interface (user interface, UI) main thread. Because the iterative computation and the rendering are performed in a same thread, data transmission is not needed, and a user can view a graph layout result in real time and perform what you see is what you get adjustment. However, the iterative computation and the rendering occupy execution time of each other. If more time is allocated to the iterative computation, page refresh time may be long and a display may be frozen. If time for the iterative computation is short, a page is frequently refreshed, resulting in long layout time. In addition, due to execution efficiency of JavaScript, this solution usually supports an interactive layout of small-scale graphs.

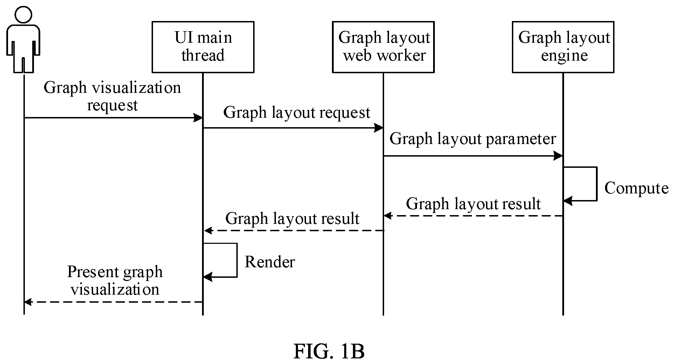

For a large-scale graph (which may also be referred to as a large graph for short), to accelerate a layout, a graph layout engine may be used to accelerate computation, and a graph layout worker thread (for example, a graph layout web worker) is used to prevent interaction blocking of the UI main thread. As shown in FIG. 1B, a user performs an operation on a user interface to trigger a graph visualization request. A UI main thread sends the graph layout request to a graph layout worker thread (graph layout web worker). The graph layout worker thread invokes a high-performance graph layout engine to perform iterative computation. After the iterative computation is completed, the graph layout engine returns a result, and finally rendering is completed. Although total computation time is shortened, data transmission costs for large-scale graphs are high. If the graph layout result is returned in real time, there will be a severe negative impact on performance. In addition, because computation of the graph layout engine in the graph layout worker thread is blocked, the graph layout worker thread cannot respond to a message of the UI main thread in time, for example, layout parameter adjustment. The method cannot provide real-time feedback and interaction. The user can only view a final graph layout result and cannot perform interactive adjustment.

In view of this, this application provides a graph layout method. The method may be performed by a graph layout system. The graph layout system may be a software system. The software system may be integrated into a browser, for example, used as a functional module of the browser, to provide a graph layout capability for a browser-based web application. The software system may alternatively be independent of a browser, and the browser invokes the software system to implement a graph layout. The software system may be deployed on a compute device, for example, deployed on a terminal device (which may also be referred to as a terminal for short) like a desktop computer, a notebook computer, a tablet computer, or a smartphone. The compute device executes program code of the software system, to perform the graph layout method in this application. The graph layout system may alternatively be a hardware system, for example, a compute device having a graph layout function. When the hardware system runs, the graph layout method in this application is performed.

Specifically, the graph layout system may include a visualization module (for example, a UI main thread), a layout management module (for example, a graph layout worker thread, also referred to as a graph layout web worker), and a layout computation module (for example, a graph layout engine, also referred to as a layout computing engine or a graph layout computing engine). The layout management module and the layout computation module perform data exchange by using a shared memory. The shared memory includes but is not limited to a shared memory between threads. A memory shared by modules with different running environments or execution languages in a same thread, for example, JavaScript and WebAssembly (WebAssembly, WASM), is also referred to as a shared memory in this specification.

The visualization module receives a layout adjustment request, where the layout adjustment request includes an adjusted graph layout parameter, and then the visualization module provides the adjusted graph layout parameter for the layout management module. The layout management module loads the adjusted graph layout parameter into the shared memory. The layout computation module obtains the adjusted graph layout parameter from the shared memory, performs at least one iterative computation based on the adjusted graph layout parameter, and updates an adjusted graph layout result in the shared memory, where the adjusted graph layout result includes at least one of an intermediate result or a final result. The visualization module displays the adjusted graph layout result.

In the method, based on the shared memory, efficient transmission of the graph layout parameter and the graph layout result is implemented, so that real-time presentation of the intermediate result can be supported, and real-time adjustment of the graph layout by the user can be supported, thereby implementing a quick response to user interaction. Regardless of a small-scale graph or a large-scale graph, the method can provide a technical solution for layout featuring high-performance, real-time presentation, and interaction, thereby improving user experience when the user views a graph (especially the large-scale graph).

To make the technical solutions of this application clearer and easier to understand, the following describes a system architecture of this application with reference to the accompanying drawings.

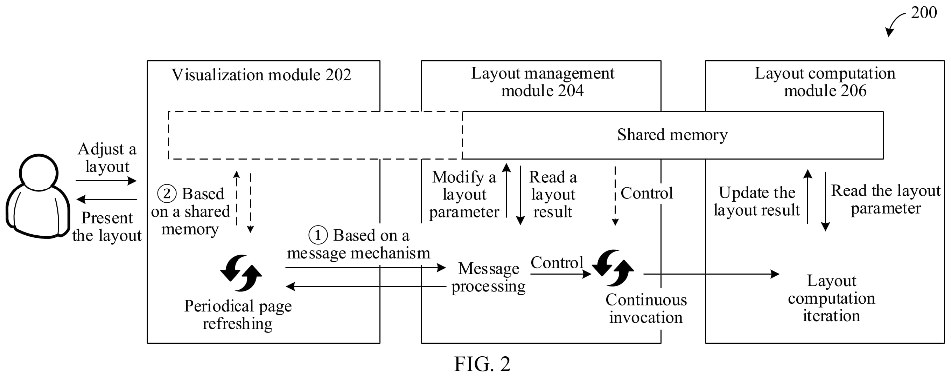

FIG. 2 shows a diagram of an architecture of a graph layout system. The graph layout system 200 includes a visualization module 202, a layout management module 204, and a layout computation module 206. Similar to the graph layout system 200 that may be a software system or a hardware system, the modules may be software modules or hardware modules. For ease of description, in this application, an example in which the modules are software modules is used for description.

The visualization module 202 is specifically a graph visualization display interface module, and is responsible for processing user interaction, for example, responsible for loading a graph layout result, adjusting a layout location of one or more nodes, periodically querying the graph layout result (for example, an adjusted graph layout result, including an intermediate result or a final result), and displaying the adjusted graph layout result. The visualization module 202 may be implemented based on HyperText Markup Language (HyperText Markup Language, HTML) and JavaScript, for example, a code block implemented based on HTML and JavaScript. When the code block is executed, a corresponding function may be implemented by using a process or a thread. For ease of description, in this application, the thread is used as an example for description. For example, the visualization module 202 may be a UI main thread.

The layout management module 204 is configured to manage a layout, including starting a layout, stopping a layout, updating a graph layout parameter, and querying a graph layout result. During specific implementation, the layout management module 204 may receive and respond to a message from the visualization module 202 (for example, the UI main thread), and perform layout management, for example, in response to the message from the UI main thread, start a layout, stop a layout, update a graph layout parameter, and query a graph layout result. The layout management module 204 may run independently of the UI main thread in a form of a worker thread (for example, a web worker).

The layout computation module 206 is configured to perform iterative computation to implement a graph layout. The layout computation module 206 may be a high-performance graph layout computing engine (also referred to as a graph layout engine or a layout computing engine). For example, the layout computation module 206 may be a graph layout engine based on WebAssembly, a web graphics library (Web Graphics Library, WebGL), or a web graphics processing unit (web graphics processing unit, WebGPU). An example in which the layout computation module 206 is a graph layout engine based on WebAssembly is used for description. The graph layout engine may be implemented based on C++ and compiled into WebAssembly code executable by a browser by using a compilation tool. The layout management module 204 further supports management of a state of the layout computation module 206.

The layout management module 204 and the layout computation module 206 perform data exchange by using a shared memory. Correspondingly, the graph layout system 200 may support real-time adjustment of the layout based on the shared memory, to implement an interactive graph layout. Specifically, the visualization module 202 is configured to: receive a layout adjustment request, where the layout adjustment request includes an adjusted graph layout parameter, and provide the adjusted graph layout parameter for the layout management module 204. The layout management module 204 is configured to load the adjusted graph layout parameter into the shared memory. The layout computation module 206 is configured to: obtain the adjusted graph layout parameter from the shared memory, perform at least one iterative computation based on the adjusted graph layout parameter, and update an adjusted graph layout result in the shared memory, where the adjusted graph layout result includes at least one of an intermediate result or a final result. The visualization module 202 displays the adjusted graph layout result (also referred to as presenting the layout). It should be noted that the visualization module 202 and the layout management module 204 may also perform data exchange by using a shared memory. In this way, the visualization module 202 may efficiently obtain the adjusted graph layout result by using the shared memory. Alternatively, the visualization module 202 and the layout management module 204 may perform data exchange by using a message-based mechanism. This is not limited in this application.

Based on a web worker multi-thread and high-performance graph layout engine, periodic refresh (generally at a refresh frequency of 60 hertz, that is, a refresh interval is 16.7 milliseconds; and when the graph is of large scale, the refresh interval may be extended to several times screen refresh time due to a rendering performance limitation) of a browser page is decoupled from the iterative computation (depending on a graph scale, it takes about 0.2 milliseconds when the graph includes 100 nodes, and about 20 milliseconds when the graph includes 10,000 nodes) of the graph layout, and the periodic refresh and the iterative computation have respective running cycles. In addition, an appropriate message mechanism or a shared memory is used to enable the UI main thread to obtain a latest graph layout result in time when the page is refreshed. The graph layout engine can respond to a graph layout parameter update of the main thread in real time, thereby supporting real-time display of the graph layout result and real-time adjustment of the graph layout parameter by a user.

During implementation based on the message mechanism, the UI main thread can change a state of the graph layout web worker and query the latest layout result by using different types of messages. The graph layout web worker may process and return the message from the UI main thread during an iterative computation interval. During implementation based on the shared memory, the UI main thread may directly read the graph layout result in the shared memory, and may directly modify the graph layout parameter in the shared memory to change a layout computation state.

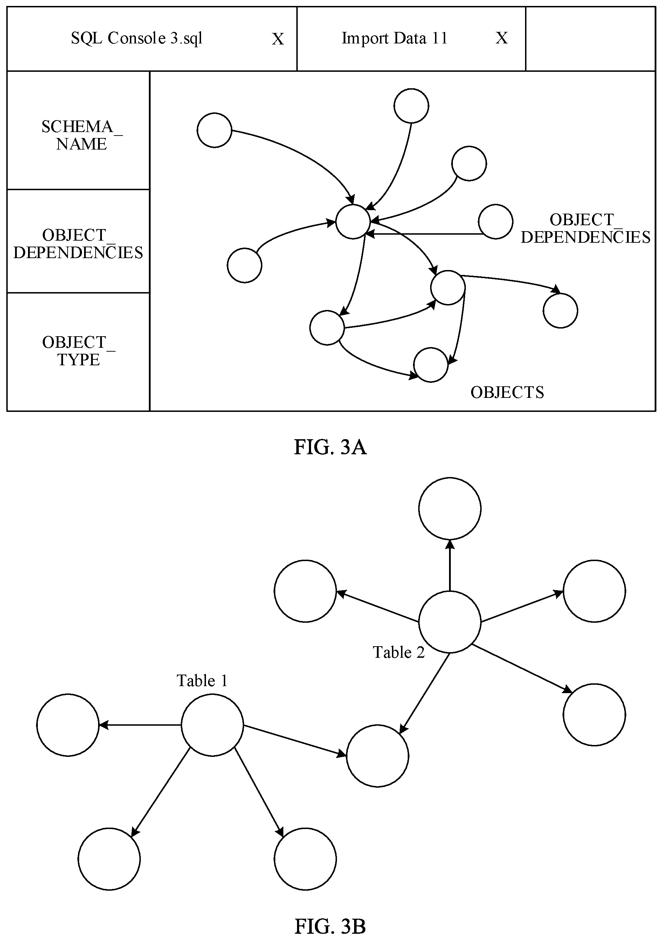

The graph layout method provided in this application may be applied to a web-based graph visualization application, including but not limited to a data asset graph application, a network structure visualization application, an object relationship analysis application, and a knowledge graph application. For ease of understanding, the following provides descriptions with reference to examples. In some examples, the graph layout system 200 may extract objects, and start a layout based on the objects and a relationship between the objects. In a layout process, the graph layout system 200 may display a graph layout result in real time. The user may adjust the layout based on the graph layout result displayed in real time by the graph layout system 200. The graph layout system 200 may display an adjusted object relationship diagram, as shown in FIG. 3A. In some other examples, the graph layout system 200 may obtain a data asset. The data asset may be a data resource that can generate value and that is recorded in a physical or electronic manner, for example, documents or electronic data. The graph layout system 200 performs iterative computation based on the data asset, to perform a graph layout on the data asset, to obtain a data asset graph. In a graph layout process, the graph layout system 200 supports real-time adjustment by the user, so as to display a more accurate data asset graph, as shown in FIG. 3B.

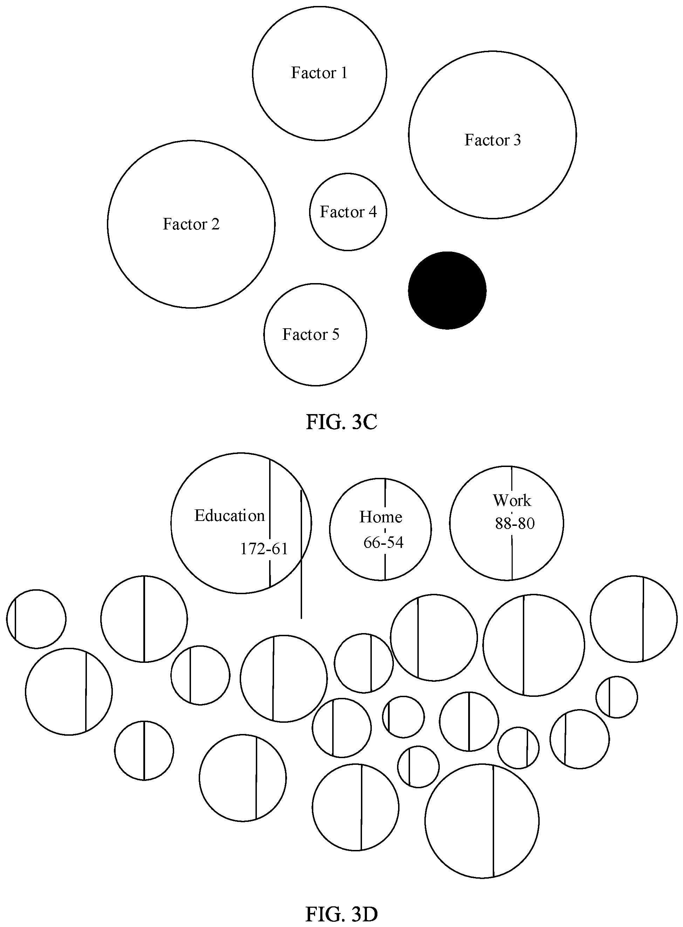

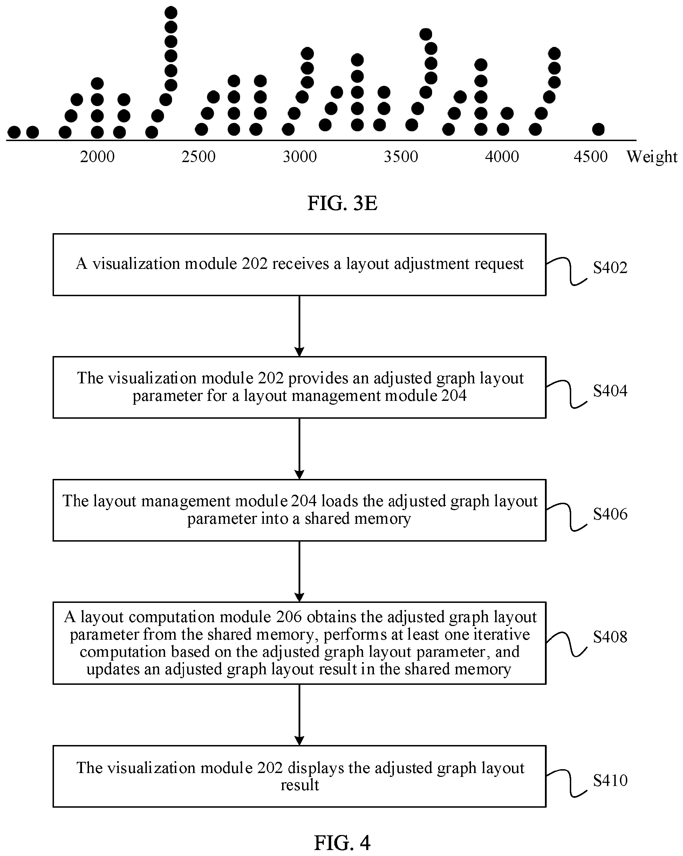

The graph layout method provided in this application may also be applied to another force-oriented graph visualization application. As shown in FIG. 3C or FIG. 3D, the graph layout system 200 may support an interactive graph layout method, so as to display the foregoing bubble chart, to assist the user in performing data analysis. As shown in FIG. 3E, the graph layout system 200 may support an interactive graph layout method, so as to display the foregoing beeswarm plot, to assist the user in performing data analysis.

To make the technical solutions of this application clearer and easier to understand, the following describes in detail the graph layout method in this application with reference to embodiments.

FIG. 4 shows a flowchart of a graph layout method. The method is applied to a graph layout system 200. The graph layout system 200 includes a visualization module 202, a layout management module 204, and a layout computation module 206. The layout management module 204 and the layout computation module 206 perform data exchange by using a shared memory. The method includes:
S402: The visualization module 202 receives a layout adjustment request.

The layout adjustment request includes an adjusted graph layout parameter. The graph layout parameter includes a force-oriented layout parameter. The force-oriented layout parameter may include at least one of a node parameter, a force parameter, or a simulated annealing parameter. The node parameter may include a node location or a node size. When a layout is initialized, the node location may be an initial location of a node. Considering that locations of some nodes are fixed, the node location may also be a fixed location. When the layout is adjusted, the node location may be an adjusted location. The force parameter may include at least one of an attraction or repulsion force between nodes, a collision force between nodes, an attraction force on a node at a location, a node centripetal force, or a spring force of a connecting edge between two nodes. The simulated annealing parameter may include but is not limited to a Markov chain length and a temperature attenuation coefficient. Simulated annealing is a serially structured optimization algorithm that can effectively avoid local minimization and finally converge to a global optimum by assigning a time-varying and finally zero probability jump to a search process. The repulsion, attraction, or collision force is computed based on a quadtree.

Considering a version iteration problem, the graph layout parameter may further include a layout identifier (identifier, ID). The layout ID is usually unique and uniquely identifies a layout process. The layout ID is usually of an integer type, and may be maintained by the visualization module 202 (for example, a UI main thread). In some examples, the layout ID may be an ordered number. For example, when the layout starts, the layout ID may be 1. When a user triggers layout adjustment (layout switching), the visualization module 202 may perform a mathematical operation on the layout ID, for example, add 1 to the layout ID as a new layout ID. In some other examples, the layout ID may alternatively be a random number.

During specific implementation, the visualization module 202 may display a graph layout result through a layout interface, and the user may trigger an adjustment operation based on the graph layout result displayed by the visualization module 202, to generate the layout adjustment request. The adjustment operation may be a drag-and-drop operation based on a graphical user interface (graphical user interface, GUI), or a command input operation based on a command user interface (command user interface, CUI). Then, the visualization module 202 receives the layout adjustment request from the user. It should be noted that the graph layout result may be an intermediate result or a final result. In other words, the user may adjust the layout in real time in a graph layout process, or may adjust the layout after layout completion.

The visualization module 202 may display the graph layout result in response to an access request of the user. Specifically, the visualization module 202 may first receive the access request, where the access request is used to access a web that supports graph visualization. The visualization module 202 provides the graph layout parameter for the layout management module 204 based on the access request. The layout management module 204 loads the graph layout parameter into the shared memory. The layout computation module 206 obtains the graph layout parameter from the shared memory, performs at least one iterative computation based on the graph layout parameter, and updates the graph layout result in the shared memory. The graph layout result includes the intermediate result or the final result. The intermediate result may be an iterative computation result that has not met an iteration stop condition, and the final result is an iterative computation result that meets the iteration stop condition. The iteration stop condition may be set based on experience. For example, the iteration stop condition may be set to that a quantity of iterations reaches n, where n is greater than 1. Correspondingly, the intermediate result may be an iterative computation result obtained through one iteration, two iterations, ..., and n-1 iterations, and the final result may be an iterative computation result obtained through n iterations.

S404: The visualization module 202 provides the adjusted graph layout parameter for the layout management module 204.

In some possible implementations, the visualization module 202 may provide the adjusted graph layout parameter for the layout management module 204 by using a message mechanism. Specifically, the visualization module 202 may send a graph layout adjustment message to the layout management module 204, where the graph layout adjustment message carries the adjusted graph layout parameter.

In some other possible implementations, the visualization module 202 and the layout management module 204 perform data exchange by using a shared memory. Correspondingly, the visualization module 202 may provide the adjusted graph layout parameter for the layout management module 204 by using the shared memory. For example, the visualization module 202 may write the adjusted graph layout parameter to the shared memory, and the layout management module 204 may read the adjusted graph layout parameter from the shared memory.

It should be noted that, the shared memory used by the visualization module 202 and the layout management module 204 to perform data exchange and the shared memory used by the layout management module 204 and the layout computation module 206 to perform data exchange may be the same shared memory, or may be different shared memories (for example, the visualization module 202 and the layout management module 204 each may use a separately allocated shared memory). When the shared memory used by the visualization module 202 and the layout management module 204 to perform data exchange and the shared memory used by the layout management module 204 and the layout computation module 206 to perform data exchange are different shared memories, data synchronization may be further performed between the shared memories.

S406: The layout management module 204 loads the adjusted graph layout parameter into the shared memory.

Specifically, the layout management module 204 loads the adjusted graph layout parameter into the shared memory for performing data exchange with the layout computation module 206, so that the layout computation module 206 performs layout adjustment based on the adjusted graph layout parameter.

S408: The layout computation module 206 obtains the adjusted graph layout parameter from the shared memory, performs at least one iterative computation based on the adjusted graph layout parameter, and updates an adjusted graph layout result in the shared memory.

Iteration (iteration) is an activity that repeats a feedback process, usually to approach and achieve a desired goal or result. Each repetition of the process is referred to as an "iteration", and a result obtained through each iteration may be used as an initial value of a next iteration. For example, after a location and a size of a node A are obtained through iterative computation in one iteration process, a location and a size of a node B may be obtained through iterative computation based on the location and the size of the node A in a next iteration process. The iteration stop condition may also be set in the iteration process. The iteration stop condition may be set to that a quantity of iterations reaches a maximum number (for example, n), or that a loss function of the iteration converges.

To respond to a message of the visualization module 202 in time, the layout management module 204 may split an iterative compute task into a plurality of subtasks, and add the plurality of subtasks to a task queue (task queue). The subtask indicates the layout computation module 206 to perform at least one iterative computation. When receiving the message (for example, a message used to adjust the layout or a message used to query the graph layout result) from the visualization module 202, the layout management module 204 may add a message event corresponding to the message to the task queue, for processing the message when execution of a currently executed subtask is completed.

It is considered that when the layout computation module 206 is a high-performance graph layout engine, the layout computation module 206 is fast in a single iterative computation, and a manner of adding to the task queue has a minimum time interval (for example, 4 milliseconds). If time for a single iterative computation is less than 4 ms, splitting each iterative computation as one subtask (one subtask includes one iterative computation) may cause a waste of time. The layout management module 204 may count time for a single iterative computation, and determine a quantity of iterative computations in the subtasks based on the time for a single iterative computation. In this way, a proper quantity of iterative computations may be set for the subtask, so that execution time of the subtask is kept exactly greater than 4 ms, and the layout management module 204 does not stay in an idle state for a long time.

Similarly, in a solution in which data exchange is performed by using the shared memory, the layout management module 204 may add a lock to a target parameter (for example, node locations of several nodes) in the graph layout parameter. After the layout management module 204 adds the lock, the layout computation module 206 may perform iterative computation based on the target parameter, and update, in the shared memory, the adjusted graph layout result obtained through the iterative computation. Then, the layout management module 204 may release the lock. In an iterative computational process, if the visualization module 202 receives the message used to query the graph layout result or the message used to adjust the layout, after the lock of the iterative computation is released, the visualization module 202 may add a lock to a corresponding location in the shared memory, and after the message is processed, release the lock, so as to ensure data consistency.

In this embodiment, the adjusted graph layout result may be the intermediate result or the final result, which is not limited in this embodiment.

S410: The visualization module 202 displays the adjusted graph layout result.

Specifically, after obtaining the adjusted graph layout result, for example, a node location and a node size that are obtained through computation based on the adjusted graph layout parameter, the visualization module 202 renders the adjusted graph layout result, so as to display the adjusted graph layout result. It should be noted that rendering may alternatively be performed by another module, for example, the layout management module 204. After rendering the adjusted graph layout result, the layout management module 204 may return a rendering result to the visualization module 202, and the visualization module 202 displays the adjusted graph layout result based on the rendering result.

In some possible implementations, the visualization module 202 may query the adjusted graph layout result in response to a scheduled task. For example, the visualization module 202 may create a scheduled task based on a refresh frequency of a browser, where the scheduled task is used to periodically refresh a page. In this way, the visualization module 202 may query the layout management module 204 for the adjusted graph layout result in response to the scheduled task. Then, the visualization module 202 renders the adjusted graph layout result, and displays the rendered graph layout result.

In some possible implementations, the visualization module 202 may further respond to a message used to query the graph layout result by the user, to implement a real-time interactive graph layout. Specifically, the visualization module 202 receives a query request of the user, and the visualization module 202 may query the adjusted graph layout result in response to the query request, and display the adjusted graph layout result.

Considering that a frequency of layout switching may be very high, the query request may further include a layout ID. When querying the graph layout result, the visualization module 202 may further first perform verification based on the layout ID. For example, the visualization module 202 may compare the layout ID in the query request with a current layout ID. If the IDs are consistent, the verification succeeds, and the visualization module 202 may query a corresponding graph layout result (for example, the adjusted graph layout result). If the IDs are inconsistent, the verification fails, and the visualization module 202 may discard the query request.

It can be learned from the foregoing content descriptions that, in the graph layout method provided in this embodiment of this application, based on the shared memory (for example, a shared memory of the browser), efficient transmission of the graph layout parameter and the graph layout result is implemented, so that real-time presentation of the intermediate result can be supported, and real-time adjustment of the graph layout by the user can be supported, thereby implementing a quick response to user interaction. Regardless of a small-scale graph or a large-scale graph, the method can provide a technical solution for layout featuring high-performance, real-time presentation, and interaction, thereby improving user experience when the user views a graph.

The following describes, with reference to specific application scenarios, a graph layout method in which data is exchanged based on a message mechanism and a graph layout method in which data is exchanged based on a shared memory.

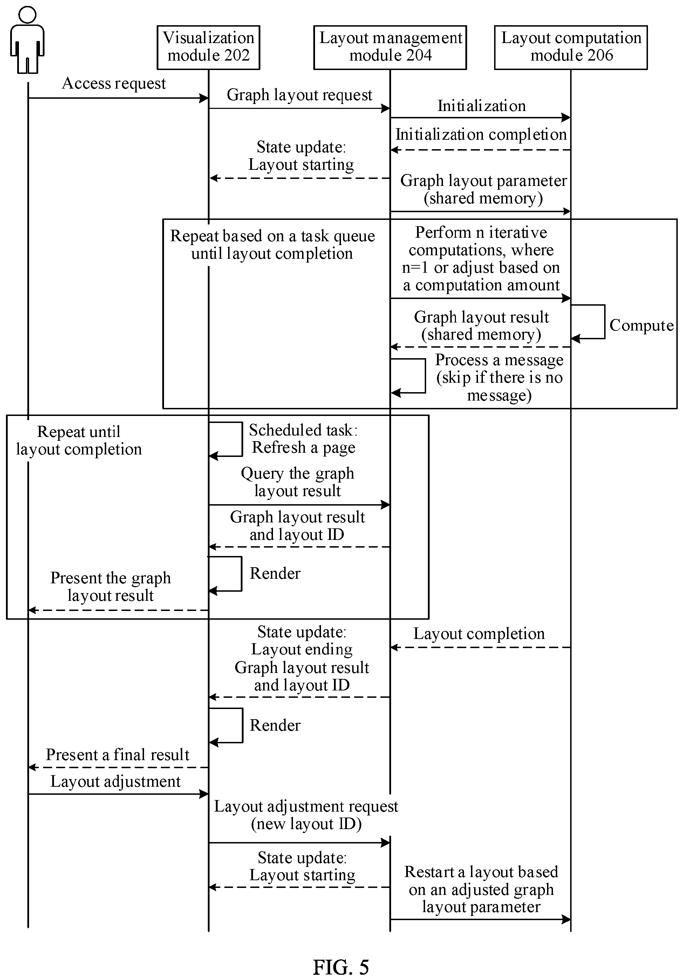

First, FIG. 5 shows a signaling flowchart of a graph layout method in which data is exchanged based on a message mechanism. The method may include an initialization stage, an iterative computation stage, a view update stage, and a layout adjustment stage.

In the initialization stage, a user may trigger an operation of accessing a web application that supports graph visualization, and send an access request (which may also be referred to as a graph visualization request) to a visualization module 202 (for example, a UI main thread). The visualization module 202 may start a layout management module (for example, a graph layout web worker) used for a graph layout, and send, to the graph layout web worker via a message (for example, postMessage), a graph layout parameter including a force-oriented layout parameter (a node location, a node size, a force parameter, or a simulated annealing parameter) and a layout ID. The message sent in the initialization stage may also be referred to as a graph layout request, and the force-oriented layout parameter and the layout ID carried in the graph layout request may be in an array form. In some examples, the force-oriented layout parameter and the layout ID may also be encapsulated in the message in an object form. Compared with the object form, the array form is easier to read and can improve exchange efficiency.

After receiving the access request, a layout management module 204 may store the layout ID, and load a layout computation module 206, for example, load a graph layout engine based on WebAssembly, a graph layout engine based on WebGL, or a graph layout engine based on WebGPU. The layout management module 204 loads the graph layout parameter into a shared memory (ArrayBuffer or SharedArrayBuffer, which may be applied for by the layout management module 204 or the layout computation module 206) shared by the layout management module 204 and the layout computation module 206 (for example, the foregoing graph layout engine based on WebAssembly), and starts layout computation. The layout computation may be at least one iterative computation based on the graph layout parameter. The layout computation module 206 may further return initialization completion to the layout management module 204, and the layout management module 204 may further notify the visualization module 202 of updating a state to: layout starting.

In the iterative computation stage, the layout management module 204 controls computation of the layout computation module 206 after starting the layout, and processes the message from the visualization module 202 in an interval between computations. The layout computation module 206 computes the graph layout in an iterative computation manner, and after each iterative computation, updates data of a corresponding node location in the memory.

The computation of the layout computation module 206 is in a blocking manner. During the layout computation, the layout management module 204 cannot respond to a request from the visualization module 202. If the layout management module 204 continuously performs layout computation, the message from the visualization module 202 cannot be responded to in time. In a related technology, a loop like for or while is usually used, and the layout computation module 206 (graph layout engine) is continuously invoked to perform iterative computation. In this case, an iterative compute task is a long task (Task). The layout management module 204 is blocked during execution of the long task, and cannot process the message.

Therefore, the layout management module 204 may split the long task into a plurality of subtasks, where each subtask includes at least one iterative computation. A sum of quantities of iterative computations of the subtasks is equal to a quantity of iterative computations of the long task. The layout management module 204 separately adds the subtasks to a task queue of a browser. The layout management module 204 supports a plurality of manners of splitting the long task into a plurality of subtasks, including but not limited to setInterval, setTimeout, postMessage, and the like. setInterval is a method for repeatedly invoking a function or executing a code segment, and there is a fixed time interval between invocations. setTimeout is a method for invoking a function or a computation expression after specified milliseconds. postMessage is a method that allows scripts from different sources to communicate effectively in an asynchronous manner to implement cross-text file, multi-window, and cross-domain message transfer.

When the visualization module 202 sends a message, the layout management module 204 may add a message event corresponding to the message to a task queue Task Queue used for message processing. After a current subtask (subtask for performing iterative computation) ends, the layout management module 204 may preferentially process the message instead of executing a next subtask (a next computation). Specifically, the layout management module 204 may maintain two task queues, where one task queue is used for iterative computation, and the other task queue is used for message processing. When receiving the message, the layout management module 204 may add the corresponding message event to the task queue used for message processing. The layout management module 204 may determine, after execution of the current subtask is completed, whether the task queue used for message processing is empty. If the task queue used for message processing is empty, a next subtask is obtained from the task queue used for iterative computation to perform iterative computation. If the task queue used for message processing is not empty, a message event is obtained from the task queue used for message processing to perform message processing until the task queue used for message processing is empty, and then a next subtask is obtained from the task queue used for iterative computation to perform iterative computation.

In some possible implementations, a high-performance graph layout engine is fast in a single computation, and some manners of adding to the task queue have a minimum time interval (usually 4 ms). If time for a single iterative computation is less than 4 ms, one iterative computation is used as one subtask, which may cause a waste of time. Therefore, the layout management module 204 may count the time for a single iterative computation. For example, the layout management module 204 may obtain time for each iterative computation in a plurality of iterative computations, and perform statistical analysis on the time for each iterative computation in the plurality of iterative computations to obtain the time for a single iterative computation. In some examples, the time for a single iterative computation may be an average value or a median value of time for the plurality of iterative computations. The layout management module 204 may determine a quantity of iterative computations in the subtasks based on the time for a single iterative computation. In this way, a proper quantity of iterations may be set, so that execution time of the subtask is kept exactly greater than 4 milliseconds (or equal to 4 milliseconds), and the layout management module 204 does not stay in an idle state for a long time.

In the view update stage, the visualization module 202 receives a layout start notification from the layout management module 204, and may listen to browser rendering. Each time before the browser re-renders a page, the visualization module 202 may send a query request to the layout management module 204, where the query request is used to query a graph layout result, and the graph layout result is used for next page refreshing. The layout management module 204 may read a node location from the shared memory, and return the node location to the visualization module 202 via a message (for example, a query result message) in combination with a layout ID currently held by the layout management module 204. The visualization module 202 checks whether the layout ID in the message matches a current layout ID. If the IDs match, rendering is performed based on a new node location, so as to refresh the page. If the IDs do not match, the visualization module 202 may ignore the message. This process enables the user to observe a layout computation process in real time.

It should be noted that rendering may be performed by the visualization module 202, or may be performed by an additional module used for rendering. The additional module used for rendering may be a web worker based on Canvas, WebGL, or WebGPU rendering. A specific rendering manner is not limited in this application. Scalable vector graphics (Scalable Vector Graphics, SVG), Canvas, WebGL, and WebGPU may all be used for graph visualization rendering.

In the layout adjustment stage, the user may drag one or more selected nodes to trigger layout adjustment. Specifically, the visualization module 202 receives a layout adjustment request of the user, where the layout adjustment request includes an adjusted graph layout parameter, and the adjusted graph layout parameter may include an adjusted node location and an adjusted layout ID. The visualization module 202 may notify the layout management module 204 of adjustment of a corresponding layout ID and graph layout parameter via a message (for example, the layout adjustment request). The layout management module 204 receives the message and adjusts the layout.

The layout ID is of an integer type, and is usually maintained by the visualization module 202. When the layout starts, the layout ID may be 1. When the layout is adjusted, the visualization module 202 may add 1 to the layout ID as a new layout ID. A frequency of layout adjustment may be high, and a message of a previous layout may not be processed. To prevent an impact of a previous layout result, a layout ID may be used for verification. Specifically, if the layout ID in the message is greater than a held layout ID, the layout management module 204 may start a new layout. When a new layout is started, a currently ongoing layout may be ended in advance. Layout computation may be restarted based on a new graph layout parameter (the adjusted graph layout parameter) and a current graph layout result.

Further, if a quantity of nodes in the layout adjustment request is greater than a quantity of nodes in the graph layout request, the layout management module 204 may invoke a shared memory scaling method provided by the browser to expand the shared memory. For a browser that does not provide the shared memory scaling method, the layout management module 204 may re-apply for a new shared memory. It should be noted that, the layout management module 204 may further destroy the original shared memory, for example, destroy the original shared memory after synchronization of the current graph layout result is completed.

After each iterative computation is completed, the layout computation module 206 may return information about whether iterative computation needs to be continued. When the information indicating that layout computation is completed (iterative computation does not need to be continued) is returned, the layout management module 204 may stop invoking the layout computation module 206, and notify the visualization module 202 of layout completion (layout ending). The layout management module 204 may further return the layout ID. After verifying the layout ID, the visualization module 202 renders a final result and stops refreshing the page.

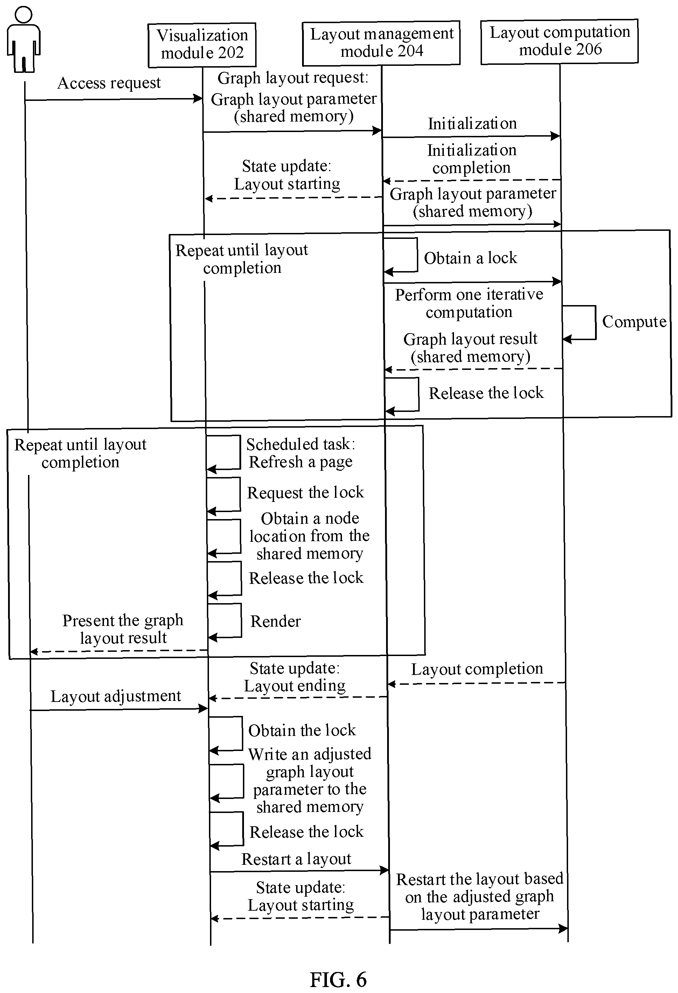

Then, FIG. 6 shows a signaling flowchart of a graph layout method in which data is exchanged based on a shared memory mechanism. A difference between this embodiment and the embodiment shown in FIG. 5 mainly lies in data transmission. A visualization module 202 and a layout management module 204 in the embodiment shown in FIG. 6 transfer a message and transmit a graph layout parameter and a graph layout result based on a shared memory (SharedArrayBuffer), instead of depending on the message mechanism in the embodiment shown in FIG. 5. The method may include an initialization stage, an iterative computation stage, a view update stage, and a layout adjustment stage.

In the initialization stage, a user may trigger an operation of accessing a web application that supports graph visualization, and send an access request (which may also be referred to as a graph visualization request) to the visualization module 202 (for example, a UI main thread). The visualization module 202 may start the layout management module 204 (for example, a graph layout web worker) used for a graph layout, store a graph layout parameter including a force-oriented layout parameter and a layout ID in the shared memory, provide, in the shared memory, an area used to store a graph layout result, and then send an address of the shared memory to the layout management module 204.

The layout management module 204 receives the address of the shared memory, and loads a layout computation module 206, for example, a graph layout engine, by using the shared memory from the visualization module 202 for initialization. Considering that the shared memory from the visualization module 202 may not be supported by some graph layout engines, the layout management module 204 may use a separately allocated shared memory to load the layout computation module 206. In this case, the layout management module 204 synchronizes the two shared memories as required. For example, after each iterative computation is completed, the layout management module 204 performs synchronization, or the visualization module 202 may notify the layout management module 204 of synchronization by using a flag bit of the shared memory. After the initialization is completed, the layout management module 204 may notify, by using the flag bit of the shared memory, the visualization module 202 of updating a state to: layout starting.

In the iterative computation stage, the layout management module 204 invokes the layout computation module 206 to perform iterative computation. Before each iterative computation, the layout management module 204 checks the flag bit of the shared memory to determine whether layout computation needs to be suspended or ended. If the computation can be continued, the layout management module 204 uses an atomic operation to check and modify a specific flag bit of the shared memory (obtain a lock), to prevent the visualization module 202 from reading data in the computation; then starts the computation; and after iterative computation of one subtask is completed, restores the corresponding specific flag bit of the shared memory (releases the lock).

In the view update stage, the visualization module 202 receives a layout start notification from the layout management module 204, and listens to browser rendering. Each time before a browser re-renders a page, the visualization module 202 obtains the lock (waiting for the layout management module 204 to release the lock), suspends the computation of the layout management module 204, obtains a node location from the shared memory, and then releases the lock. The visualization module 202 may render the graph layout result based on a new node location, so as to refresh the page.

In the layout adjustment stage, the user may drag one or more selected nodes to adjust the layout. The visualization module 202 receives a layout adjustment request of the user, where the layout adjustment request includes an adjusted graph layout parameter, and the adjusted graph layout parameter may include an adjusted node location and an adjusted layout ID. Then, the visualization module 202 obtains the lock, suspends the computation of the layout management module 204, updates the adjusted graph layout parameter in the shared memory, and releases the lock. The layout management module 204 may restart layout computation based on the adjusted graph layout parameter and a current graph layout result. If the layout management module 204 has stopped the computation, the visualization module 202 may notify, by using the flag bit of the shared memory, the layout management module 204 of restarting the iterative computation.

The original shared memory can still be used during layout adjustment. When the adjusted graph layout parameter indicates that a quantity of nodes or edges changes, the visualization module 202 may scale a size of the shared memory by using a grow method. For a browser that does not support the grow method, when a capacity of the shared memory cannot accommodate layout data (the graph layout parameter and the graph layout result), the visualization module 202 may re-apply for a shared memory, send an address to the layout management module 204, and destroy the original shared memory.

After each iterative computation is completed or after execution of the subtask is completed, the layout computation module 206 may return information about whether iterative computation needs to be continued. When the information indicating that layout computation is completed (iterative computation does not need to be continued) is returned, the layout management module 204 may stop invoking the layout computation module 206, and notify the visualization module 202 of layout completion (layout ending). The layout management module 204 may further return the layout ID. After verifying the layout ID, the visualization module 202 renders a final result and stops refreshing the page.

Based on the foregoing graph layout method, this application further provides a graph layout system. As shown in FIG. 2, the graph layout system 200 includes:
the visualization module 202, configured to: receive a layout adjustment request, where the layout adjustment request includes an adjusted graph layout parameter, and provide the adjusted graph layout parameter for the layout management module;
the layout management module 204, configured to load the adjusted graph layout parameter into the shared memory; and
the layout computation module 206, configured to: obtain the adjusted graph layout parameter from the shared memory, perform at least one iterative computation based on the adjusted graph layout parameter, and update an adjusted graph layout result in the shared memory, where the adjusted graph layout result includes at least one of an intermediate result or a final result.

The visualization module 202 is further configured to display the adjusted graph layout result.

For example, the visualization module 202, the layout management module 204, and the layout computation module 206 may be implemented by using hardware, or may be implemented by using software.

When implemented by using software, the visualization module 202, the layout management module 204, and the layout computation module 206 may be application programs running on a compute device, for example, a computing engine. The application program may be provided in a form of a virtualization service. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by using hardware, the visualization module 202, the layout management module 204, and the layout computation module 206 may include at least one processor, a kernel of a processor, or the like. Alternatively, the visualization module 202, the layout management module 204, and the layout computation module 206 may be devices implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

In some possible implementations, the visualization module 202 is further configured to:
receive an access request, where the access request is used to access a web that supports graph visualization; and
provide a graph layout parameter for the layout management module based on the access request.

The layout management module 204 is further configured to:
load the graph layout parameter into the shared memory.

The layout computation module 206 is further configured to:
obtain the graph layout parameter from the shared memory, perform at least one iterative computation based on the graph layout parameter, and update a graph layout result in the shared memory, where the graph layout result includes the intermediate result.

The visualization module 202 is further configured to:
display the graph layout result.

In some possible implementations, the visualization module 202 is further configured to:
receive a query request of a user; and
query the adjusted graph layout result in response to the query request, and display the adjusted graph layout result.

In some possible implementations, the visualization module 202 is specifically configured to:
query the adjusted graph layout result in response to a scheduled task; and
render the adjusted graph layout result, and display the rendered graph layout result.

In some possible implementations, the visualization module 202 is further configured to:
provide a layout identifier for the layout management module.

The visualization module is specifically configured to:
query, based on the layout identifier, the adjusted graph layout result corresponding to the layout identifier.

In some possible implementations, the visualization module 202 is specifically configured to:
send a graph layout adjustment message to the layout management module, where the graph layout adjustment message carries the adjusted graph layout parameter.

In some possible implementations, the layout management module 204 is further configured to:
split an iterative compute task into a plurality of subtasks, and add the plurality of subtasks to a task queue, where the subtask indicates the layout computation module to perform at least one iterative computation; and
when receiving a message from the visualization module, add a message event corresponding to the message to the task queue, for processing the message when execution of a currently executed subtask is completed.

In some possible implementations, the layout management module 204 is further configured to:
count time for a single iterative computation, and determine a quantity of iterative computations in the subtasks based on the time for a single iterative computation.

In some possible implementations, the visualization module and the layout management module perform data exchange by using a shared memory, and the visualization module is specifically configured to:
provide the adjusted graph layout parameter for the layout management module by using the shared memory.

In some possible implementations, the layout computation module 206 is specifically configured to:
after the layout management module adds a lock to a target parameter in the adjusted graph layout parameter, perform iterative computation based on the target parameter, and update, in the shared memory, the adjusted graph layout result obtained through the iterative computation.

In some possible implementations, the layout computation module includes a layout computing engine based on WebAssembly, WebGL, or WebGPU.

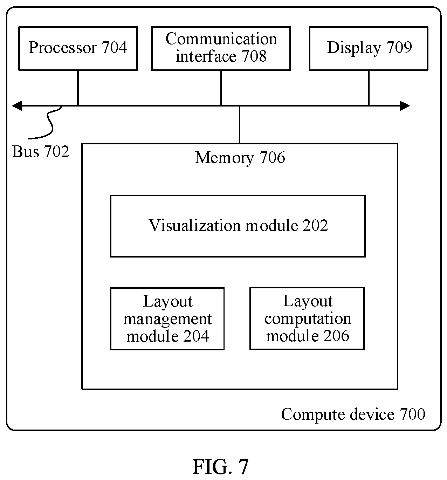

This application further provides a compute device 700. As shown in FIG. 7, the compute device 700 includes a bus 702, a processor 704, a memory 706, and a communication interface 708. The processor 704, the memory 706, and the communication interface 708 communicate with each other through the bus 702. The compute device 700 may be a server or a terminal device. It should be understood that quantities of processors and memories in the compute device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 7, but this does not mean that there is only one bus or only one type of bus. The bus 702 may include a path for transmitting information between components (for example, the memory 706, the processor 704, and the communication interface 708) of the compute device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). Alternatively, the memory 706 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 706 stores executable program code, and the processor 704 executes the executable program code to implement the foregoing graph layout method. Specifically, the memory 706 stores instructions used by the graph layout system 200 to execute the graph layout method. For example, the memory 706 stores instructions used to implement functions of the visualization module 202, the layout management module 204, and the layout computation module 206. The processor 704 executes instructions used to implement functions of the visualization module 202, so as to perform the method steps performed by the visualization module 202 in the foregoing embodiment. The processor 704 executes instructions used to implement functions of the layout management module 204, so as to perform the method steps performed by the layout management module 204 in the foregoing embodiment. The processor 704 executes instructions used to implement functions of the layout computation module 106, so as to perform the method steps performed by the layout computation module 106 in the foregoing embodiment.

The communication interface 708 uses a transceiver module, for example, but not limited to, a network interface card or a transceiver, to implement communication between the compute device 700 and another device or a communication network.

In some possible implementations, the compute device may further include a display 709. The visualization module 202 may present a visualization interface, for example, a visualization layout interface, to a user through the display 709, and receive a layout adjustment request triggered by the user through the visualization layout interface. Similarly, the visualization module 202 may further display an adjusted graph layout result (for example, at least one of an intermediate result or a final result) to the user through the display 709. During specific implementation, the processor 704 executes instructions used to implement functions of the visualization module 202, and starts a UI main thread. The UI main thread may output the rendered graph layout result to the display 709 for display.

An embodiment of this application further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the compute device to perform the foregoing graph layout method applied to the graph layout system.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the foregoing graph layout method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the protection scope of the technical solutions of embodiments of the present invention.

## Claims

1. A graph layout method, applied to a graph layout system, wherein the graph layout system comprises a visualization module, a layout management module, and a layout computation module, the layout management module and the layout computation module perform data exchange by using a shared memory, and the method comprises:
receiving, by the visualization module, a layout adjustment request, wherein the layout adjustment request comprises an adjusted graph layout parameter, and providing the adjusted graph layout parameter for the layout management module;
loading, by the layout management module, the adjusted graph layout parameter into the shared memory; and obtaining, by the layout computation module, the adjusted graph layout parameter from the shared memory, performing at least one iterative computation based on the adjusted graph layout parameter, and updating an adjusted graph layout result in the shared memory, wherein the adjusted graph layout result comprises at least one of an intermediate result or a final result; and
displaying, by the visualization module, the adjusted graph layout result.

2. The method according to claim 1, wherein before the receiving, by the visualization module, the layout adjustment request, the method further comprises:
receiving, by the visualization module, an access request, wherein the access request is used to access a web that supports graph visualization;
providing, by the visualization module, a graph layout parameter for the layout management module based on the access request;
loading, by the layout management module, the graph layout parameter into the shared memory; and obtaining, by the layout computation module, the graph layout parameter from the shared memory, performing at least one iterative computation based on the graph layout parameter, and updating a graph layout result in the shared memory, wherein the graph layout result comprises the intermediate result; and
displaying, by the visualization module, the graph layout result.

3. The method according to claim 1 or 2, wherein the method further comprises:
receiving, by the visualization module, a query request of a user; and
querying, by the visualization module, the adjusted graph layout result in response to the query request, and displaying the adjusted graph layout result.

4. The method according to claim 1 or 2, wherein the displaying, by the visualization module, the adjusted graph layout result comprises:
querying, by the visualization module, the adjusted graph layout result in response to a scheduled task; and
rendering, by the visualization module, the adjusted graph layout result, and displaying the rendered graph layout result.

5. The method according to claim 4, wherein the method further comprises:
providing, by the visualization module, a layout identifier for the layout management module; and
the querying, by the visualization module, the adjusted graph layout result comprises:
querying, by the visualization module based on the layout identifier, the adjusted graph layout result corresponding to the layout identifier.

6. The method according to any one of claims 1 to 5, wherein the providing, by the visualization module, the adjusted graph layout parameter for the layout management module comprises:
sending, by the visualization module, a graph layout adjustment message to the layout management module, wherein the graph layout adjustment message carries the adjusted graph layout parameter.

7. The method according to claim 6, wherein the method further comprises:
splitting, by the layout management module, an iterative compute task into a plurality of subtasks, and adding the plurality of subtasks to a task queue, wherein the subtask indicates the layout computation module to perform at least one iterative computation; and
when receiving a message from the visualization module, adding, by the layout management module, a message event corresponding to the message to the task queue, for processing the message when execution of a currently executed subtask is completed.

8. The method according to claim 7, wherein the method further comprises:
counting, by the layout management module, time for a single iterative computation, and determining a quantity of iterative computations in the subtasks based on the time for a single iterative computation.

9. The method according to any one of claims 1 to 5, wherein the visualization module and the layout management module perform data exchange by using a shared memory, and the providing, by the visualization module, the adjusted graph layout parameter for the layout management module comprises:
providing, by the visualization module, the adjusted graph layout parameter for the layout management module by using the shared memory.

10. The method according to claim 9, wherein the performing, by the layout computation module, at least one iterative computation based on the adjusted graph layout parameter, and updating the adjusted graph layout result in the shared memory comprises:
after the layout management module adds a lock to a target parameter in the adjusted graph layout parameter, performing, by the layout computation module, iterative computation based on the target parameter, and updating, in the shared memory, the adjusted graph layout result obtained through the iterative computation.

11. The method according to any one of claims 1 to 10, wherein the layout computation module comprises a layout computing engine based on WebAssembly, WebGL, or WebGPU.

12. A graph layout system, wherein the graph layout system comprises a visualization module, a layout management module, and a layout computation module, and the layout management module and the layout computation module perform data exchange by using a shared memory;
the visualization module is configured to: receive a layout adjustment request, wherein the layout adjustment request comprises an adjusted graph layout parameter, and provide the adjusted graph layout parameter for the layout management module;
the layout management module is configured to load the adjusted graph layout parameter into the shared memory;
the layout computation module is configured to: obtain the adjusted graph layout parameter from the shared memory, perform at least one iterative computation based on the adjusted graph layout parameter, and update an adjusted graph layout result in the shared memory, wherein the adjusted graph layout result comprises at least one of an intermediate result or a final result; and
the visualization module is further configured to display the adjusted graph layout result.

13. The system according to claim 12, wherein the visualization module is further configured to:
receive an access request, wherein the access request is used to access a web that supports graph visualization; and
provide a graph layout parameter for the layout management module based on the access request;
the layout management module is further configured to:
load the graph layout parameter into the shared memory;
the layout computation module is further configured to:
obtain the graph layout parameter from the shared memory, perform at least one iterative computation based on the graph layout parameter, and update a graph layout result in the shared memory, wherein the graph layout result comprises the intermediate result; and
the visualization module is further configured to:
display the graph layout result.

14. The system according to claim 12 or 13, wherein the visualization module is further configured to:
receive a query request of a user; and
query the adjusted graph layout result in response to the query request, and display the adjusted graph layout result.

15. The system according to claim 12 or 13, wherein the visualization module is specifically configured to:
query the adjusted graph layout result in response to a scheduled task; and
render the adjusted graph layout result, and display the rendered graph layout result.

16. The system according to claim 15, wherein the visualization module is further configured to:
provide a layout identifier for the layout management module; and
the visualization module is specifically configured to:
query, based on the layout identifier, the adjusted graph layout result corresponding to the layout identifier.

17. The system according to any one of claims 12 to 16, wherein the visualization module is specifically configured to:
send a graph layout adjustment message to the layout management module, wherein the graph layout adjustment message carries the adjusted graph layout parameter.

18. The system according to claim 17, wherein the layout management module is further configured to:
split an iterative compute task into a plurality of subtasks, and add the plurality of subtasks to a task queue, wherein the subtask indicates the layout computation module to perform at least one iterative computation; and
when receiving a message from the visualization module, add a message event corresponding to the message to the task queue, for processing the message when execution of a currently executed subtask is completed.

19. The system according to claim 18, wherein the layout management module is further configured to:
count time for a single iterative computation, and determine a quantity of iterative computations in the subtasks based on the time for a single iterative computation.

20. The system according to any one of claims 12 to 16, wherein the visualization module and the layout management module perform data exchange by using a shared memory, and the visualization module is specifically configured to:
provide the adjusted graph layout parameter for the layout management module by using the shared memory.

21. The system according to claim 20, wherein the layout computation module is specifically configured to:
after the layout management module adds a lock to a target parameter in the adjusted graph layout parameter, perform iterative computation based on the target parameter, and update, in the shared memory, the adjusted graph layout result obtained through the iterative computation.

22. The system according to any one of claims 12 to 21, wherein the layout computation module comprises a layout computing engine based on WebAssembly, WebGL, or WebGPU.

23. A compute device, wherein the compute device comprises at least one processor and at least one memory, the at least one memory stores computer-readable instructions, and the at least one processor executes the computer-readable instructions, to enable the compute device to perform the graph layout method according to any one of claims 1 to 11.

24. A computer-readable storage medium, comprising computer-readable instructions, wherein the computer-readable instructions are used for implementing the graph layout method according to any one of claims 1 to 11.

25. A computer program product, comprising computer-readable instructions, wherein the computer-readable instructions are used for implementing the graph layout method according to any one of claims 1 to 11.
